# EUROPEAN PATENT SPECIFICATION

(11) **EP 2 316 872 B1**
(45) Date of publication and mention of the grant of the patent: **12.07.2017**
(21) Application number: 10013597.9
(22) Date of filing: 13.10.2010
(51) Int. Cl.: C08K 5/5419, B32B 25/20, C08K 3/36, C08J 5/12

(54) **Bonding method and laminate of fluorosilicone rubber and dimethylsilicone rubber**
Klebeverfahren und Laminat aus Fluorsilikongummi und Dimethylsilikongummi
Procédé de liaison et stratifié de caoutchouc de fluorosilicone et caoutchouc de dimethylsilicone

(30) Priority: 29.10.2009 JP 2009248437
(43) Date of publication of application: 04.05.2011
(73) Proprietor: Shin-Etsu Chemical Co., Ltd., Tokyo (JP)
(72) Inventor: Hayashida, Osamu, Annaka-shi Gunma-ken (JP)
(74) Representative: Ter Meer Steinmeister & Partner

(56) References cited:
- EP-A1- 1 233 014
- EP-A1- 1 507 110
- EP-B1- 1 728 830

## Description

### TECHNICAL FIELD

This invention relates to a method for bonding fluorosilicone rubber and dimethylsilicone rubber and a laminate obtained thereby, and more particularly, to a method for molding and co-vulcanization bonding a fluorosilicone rubber composition and a dimethylsilicone rubber composition to form a laminate characterized by a strong bond at the interface between the two rubbers and a least possibility of delamination.

### BACKGROUND ART

Fluorosilicone rubber has excellent properties including heat resistance, freeze resistance, oil resistance, fuel resistance and compression recovery and is widely used as parts in automobiles, aircraft, other transportation vehicles, petroleum equipment, and marine equipment.

When used as automotive parts, typically turbo-hoses, fluorosilicone rubber is sometimes molded as a two-layer structure with dimethylsilicone rubber. The hose is constructed in two-layer structure for the reason that fluorosilicone is selected for the inside layer where oil resistance is required and dimethylsilicone rubber having higher repulsion and shear resistance than the fluorosilicone is appropriate for the outside layer. When fluorosilicone and dimethylsilicone are laminated and vulcanized, the resulting laminate is expected to have so low a degree of interfacial bonding because of a substantial incompatibility between the polymers that it is prone to delamination. Many studies were made to solve the problem.

EP 1728830B1 describes a siloxane of the formula: 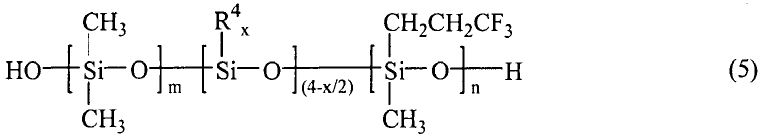 wherein R⁴ is a substituted or unsubstituted, monovalent aliphatic unsaturated hydrocarbon group of 2 to 8 carbon atoms, an unsubstituted, monovalent aliphatic saturated hydrocarbon group of 1 to 8 carbon atoms, an aromatic hydrocarbon group or a hydroxyl group, x is an integer of 0 to 2, m and n are each independently a positive number. The siloxane is added to dimethylsilicone or fluorosilicone to impart adhesion. With this method, however, a relatively large amount of the siloxane must be added. Thus the rubber itself may eventually fail to exhibit the desired physical strength and elongation.

EP 2125366A1 discloses co-vulcanization of a dimethylsilicone containing organohydrogenpolysiloxane and a fluoro-rubber. It does not refer to bonding with fluorosilicone. Even when an organohydrogenpolysiloxane having mainly methyl groups as recommended therein is added to a fluorosilicone, no significant effects are observable in bonding with dimethylsilicone.

### Citation List

Patent Document 1: EP 1728830B1 (JP-A 2006-328303)
Patent Document 2: EP 2125366A1 (JP-A 2008-156564)

EP 1 507 110 relates to a laminated rubber hose comprising an inner layer made of a fluororubber composition and an outer layer made of a silicone rubber composition, co-vulcanized, wherein the peel strength between the inner layer and the outer layer is at least 8 N/cm.

### SUMMARY OF INVENTION

An object of the invention is to provide a method for bonding fluorosilicone rubber and dimethylsilicone rubber, by laminate molding and co-vulcanization bonding a fluorosilicone rubber composition and a dimethylsilicone rubber composition to form a laminate characterized by a strong bond at the interface. Another object is to provide a fluorosilicone rubber/dimethylsilicone rubber laminate having improved interfacial adhesion.

The inventor has found that when a fluorosilicone rubber composition and/or a dimethylsilicone rubber composition contains a dry silica or fumed silica which has a BET specific surface area of at least 250 m²/g and which has not been surface treated with a hydrophobic surface treating agent as a reinforcing inorganic filler, and at least one of the fluorosilicone and dimethylsilicone rubber compositions contains an adhesion promoter, the fluorosilicone rubber composition and the dimethylsilicone rubber composition can be laminated and co-vulcanized into a laminate having a strong bond at the interface between fluorosilicone and dimethylsilicone rubbers.

The present invention provides a method for bonding a fluorosilicone rubber composition and a dimethylsilicone rubber composition through co-vulcanization, wherein either one or both of the silicone rubber compositions comprises a surface-untreated dry silica having a BET specific surface area of at least 250 m²/g as reinforcing silica, and at least one of the silicone rubber compositions comprises, as adhesion promoter,
an organohydrogenpolysiloxane comprising, at least one for each, siloxane units of the following formulae (1), (2) and (3) in a molecule, 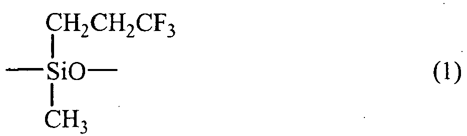 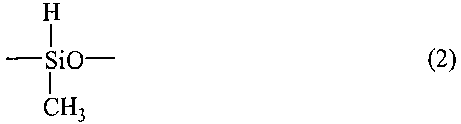 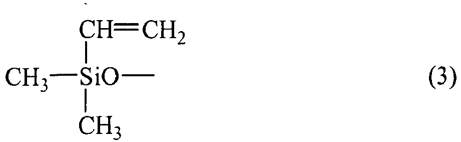 or an organohydrogenpolysiloxane comprising, at least one for each, siloxane units of the following formulae (1), (2) and (4) in a molecule.

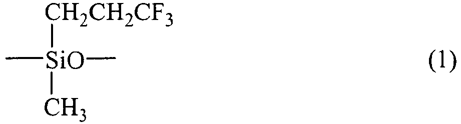

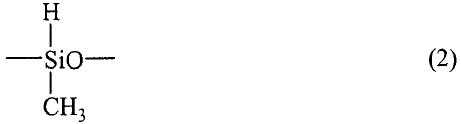

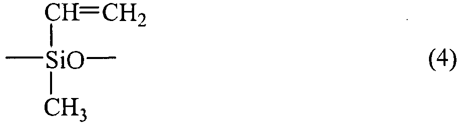

In a preferred embodiment, both the fluorosilicone rubber composition and the dimethylsilicone rubber composition are vulcanized with an organic peroxide.

Also contemplated herein is a laminate of fluorosilicone rubber and dimethylsilicone rubber which have been co-vulcanization bonded by the method.

### ADVANTAGEOUS EFFECTS OF INVENTION

A molded laminate of fluorosilicone rubber and dimethylsilicone rubber according to the invention is improved in interfacial adhesion even when the pressure of molding accompanied with press vulcanization, steam vulcanization or hot air vulcanization is low. The laminate is thus useful, for example, as an automotive turbo-hose which is typically constructed in two-layer structure of fluorosilicone and dimethylsilicone.

### DESCRIPTION OF EMBODIMENTS

According to the invention, a fluorosilicone rubber composition and a dimethylsilicone rubber composition are bonded together. The respective compositions are described in detail.

### Fluorosilicone rubber

The fluorosilicone rubber (or rubber cured by vulcanization) is formed from an uncured fluorosilicone rubber composition, preferably comprising (a) 100 parts by weight of a trifluoropropyl-containing organopolysiloxane and (b) 2 to 100 parts by weight of reinforcing silica.

### (a) Trifluoropropyl-containing organopolysiloxane

The trifluoropropyl-containing organopolysiloxane preferably has the average compositional formula (6).

R¹ₐR²_{b}R³_{c}SiO_{(4-a-b-c)/2} (6)

Herein R¹ is trifluoropropyl. R² is selected from substituted or unsubstituted, monovalent aliphatic unsaturated hydrocarbon groups of 2 to 8 carbon atoms, for example, alkenyl groups such as vinyl, allyl, propenyl, butenyl and hexenyl. R³ is selected from unsubstituted, monovalent aliphatic saturated hydrocarbon groups of 1 to 8 carbon atoms and aromatic hydrocarbon groups, for example, alkyl groups such as methyl, ethyl, propyl, butyl and hexyl, aryl groups such as phenyl and tolyl, and aralkyl groups such as benzyl. The subscript a is a positive number of 0.96 to 1.01, b is a positive number of 0.0001 to 0.005, c is a positive number of 0.96 to 1.06, and the sum of a+b+c is from 1.98 to 2.02.

The organopolysiloxane should have at least two monovalent aliphatic unsaturated hydrocarbon groups R² in a molecule. It is preferred that alkenyl groups, typically vinyl groups account for 0.02 to 1 mol% based on the number of silicon atoms in the molecule. R² may be positioned at an end of the backbone or a side chain from the backbone or both. More than 1 mol% of alkenyl groups may give rise to problems that the rubber hardness increases beyond the practical level, and the rubber becomes so brittle as to invite a drop of mechanical strengths such as tensile strength and tear strength.

Preferably the organopolysiloxane has a viscosity of at least 10,000 mPa-s at 25°C. More preferably the viscosity is from 100,000 to 100,000,000 mPa-s. Most preferably the organopolysiloxane is gum-like at room temperature (25°C), that is, non-liquid having no self-flowing. It is noted that the viscosity is measured by a rotational viscometer.

As described in JP-A S62-174260, for example, the organopolysiloxane of formula (6) may be obtained by ring-opening polymerization of tri(trifluoropropyl)trimethylcyclotrisiloxane using a siloxane oligomer of formula (7) as an initiator.

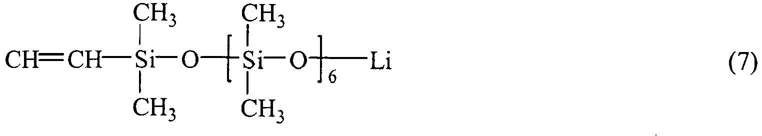

### (b) Reinforcing silica

The reinforcing silica or filler as component (b) is essential to obtain a silicone rubber compound having good mechanical strength. In order to produce the desired adhesion, the silica should preferably have a specific surface area of at least 250 m²/g, more preferably at least 300 m²/g, as measured by the BET adsorption method. Although no upper limit is imposed on the specific surface area, the silica may generally have a specific surface area of up to 500 m²/g, preferably up to 450 m²/g from the standpoints of workability and commercial availability. Dry silica or fumed silica is desired as the reinforcing silica or filler. It is not recommended that silica particles be previously surface-treated with organopolysiloxanes, organopolysilazanes, chlorosilanes, alkoxysilanes or the like for hydrophobic treatment. The amount of reinforcing silica added is 2 to 100 parts, preferably 5 to 60 parts by weight per 100 parts by weight of the organopolysiloxane (a) because less than 2 parts by weight of silica is too small to produce any reinforcing effect and more than 100 parts by weight may interfere with working and adversely affect physical properties of the resulting silicone rubber.

To the fluorosilicone rubber composition used herein, additives may be added if necessary. Suitable additives include non-reinforcing silica such as ground quartz or diatomaceous earth, carbon black such as acetylene black, furnace black or channel black, fillers such as calcium carbonate, colorants, heat resistance modifiers, flame retardants, acid acceptors, heat conduction improvers, mold release agents, and dispersants such as alkoxysilanes, diphenylsilane diols, carbon-functional silanes, and both end silanol-blocked low molecular weight siloxanes.

### Dimethylsilicone rubber

The dimethylsilicone rubber (or rubber cured by vulcanization) is formed from an uncured dimethylsilicone rubber composition, preferably comprising (c) 100 parts by weight of a dimethylpolysiloxane and (b) 2 to 100 parts by weight of reinforcing silica.

### (c) Dimethylpolysiloxane

The dimethylpolysiloxane used herein preferably has the average compositional formula (8).

RₐSiO_{(4-a)/2} (8)

Herein R is each independently selected from unsubstituted monovalent hydrocarbon groups of 1 to 10 carbon atoms, preferably 1 to 8 carbon atoms, for example, alkyl groups such as methyl, ethyl, propyl and butyl, cycloalkyl groups such as cyclohexyl, and alkenyl groups such as vinyl, allyl, butenyl and hexenyl. It is essential that at least two aliphatic unsaturated groups (e.g., alkenyl groups) be included as R. Preferably aliphatic unsaturated groups such as alkenyl groups account for 0.001 to 20 mol%, more preferably 0.025 to 5 mol% of R groups. The subscript "a" is a positive number of 1.90 to 2.05. The organopolysiloxane of formula (8) is preferably straight although a mixture thereof with one or more different molecular structure is acceptable.

The organopolysiloxane preferably has an average degree of polymerization of 100 to 50,000, more preferably 1,500 to 10,000, and even more preferably 3,000 to 8,000. Most preferably the organopolysiloxane is a gum having no self-flowing at room temperature (25°C). It is noted that the average degree of polymerization is determined as a number average value by gel permeation chromatography (GPC) analysis versus polystyrene standards.

### (b) Reinforcing silica

The reinforcing silica as component (b) is the same as the reinforcing silica (b) described as the reinforcing inorganic filler for the fluorosilicone rubber.

To the dimethylsilicone rubber composition used herein, additives may be added if necessary. Suitable additives include non-reinforcing silica such as ground quartz or diatomaceous earth, carbon black such as acetylene black, furnace black or channel black, fillers such as calcium carbonate, colorants, heat resistance modifiers, flame retardants, acid acceptors, heat conduction improvers, mold release agents, and dispersants such as alkoxysilanes, diphenylsilane diols, carbon-functional silanes, and both end silanol-blocked low molecular weight siloxanes.

The fluoro- and dimethylsilicone rubber compositions used herein may be prepared by combining the above-described components and uniformly mixing them on a rubber masticator such as a twin-roll mill, Banbury mixer, dough mixer or kneader.

According to the invention, an organohydrogenpolysiloxane containing at least one trifluoropropyl group and at least one vinyl group is added as an adhesion promoter to the fluorosilicone rubber composition or the dimethylsilicone rubber composition or both. Specifically, an organohydrogenpolysiloxane comprising, at least one for each, divalent siloxane units or monovalent siloxy units of the following formulae (1), (2) and (3) or formulae (1), (2) and (4) in a molecule is added to the fluorosilicone rubber composition or the dimethylsilicone rubber composition or both. That is, an organohydrogenpolysiloxane comprising at least one siloxane unit (1), at least one siloxane unit (2), and at least one siloxy group (3), or an organohydrogenpolysiloxane comprising at least one siloxane unit (1), at least one siloxane unit (2), and at least one siloxane unit (4) is added to the fluorosilicone rubber composition and/or the dimethylsilicone rubber composition.

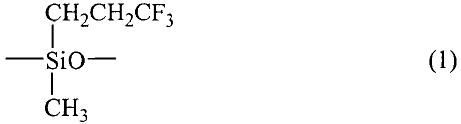

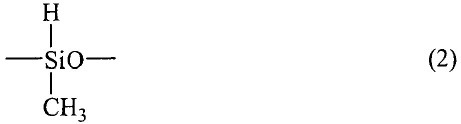

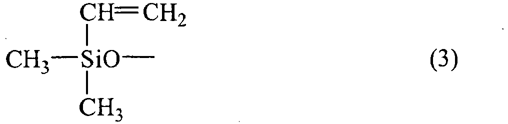

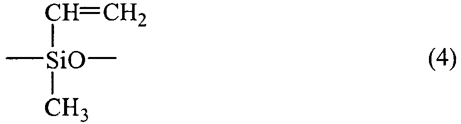

The adhesion promoter should preferably have a viscosity of up to 2,000 mPa-s at 25°C. A promoter having a viscosity beyond the range may be less dispersible when added to the rubber compound and fail to exert an effect of improving interfacial adhesion because of a lack of moieties having functionality at the surface. Preferably trifluoropropyl-containing siloxane units of formula (1) account for 1 to 90 mol%, more preferably 5 to 80 mol% in the molecule (mol% based on all siloxane units in the molecule). Less than 1 mol% or more than 90 mol% of units (1) may be ineffective to adhesion. Preferably hydrogensiloxane units of formula (2) account for 1 to 90 mol%, more preferably 5 to 80 mol% in the molecule. Less than 1 mol% or more than 90 mol% of units (2) may be ineffective to adhesion. Preferably dimethylvinylsiloxane units of formula (3) account for 1 to 10 mol% in the molecule. Less than 1 mol% of units (3) may be ineffective to adhesion. More than 10 mol% of units (3) may lead to increased rubber hardness, with the risk of impairing physical properties. Preferably methylvinylsiloxane units of formula (4) account for 1 to 10 mol% in the molecule. Less than 1 mol% of units (4) may be ineffective to adhesion. More than 10 mol% of units (4) may lead to increased rubber hardness, with the risk of impairing physical properties.

An amount of the adhesion promoter added is 0.1 to 30 parts, preferably 0.3 to 10 parts by weight per 100 parts by weight of the base polymer in the fluorosilicone or dimethylsilicone rubber composition, that is, (a) trifluoropropyl-containing organopolysiloxane or (c) dimethylpolysiloxane. Less than 0.1 pbw of the promoter may be ineffective to adhesion. More than 30 pbw of the promoter may adversely affect the working and physical properties of the silicone rubber. The addition of the adhesion promoter may be accomplished by incorporating it in the silicone rubber composition on a kneader, pressure kneader, or roll mill. According to the invention, a (cured) laminate is manufactured by adding an organic peroxide vulcanizing agent to both the fluorosilicone rubber composition and the dimethylsilicone rubber composition, laminating the compositions, and heat vulcanizing under pressure. Examples of the organic peroxide vulcanizing agent include benzoyl peroxide, tert-butyl perbenzoate, o-methylbenzoyl peroxide, p-methylbenzoyl peroxide, di-tert-butyl peroxide, dicumyl peroxide, 1,1-bis(tert-butylperoxy)-3,3,5-trimethylcyclohexane, 2,5-dimethyl-2,5-di(tert-butylperoxy)hexane, and 2,5-dimethyl-2,5-di(tert-butylperoxy)hexyne, which may be used alone or in combination of two or more. An amount of the organic peroxide vulcanizing agent added is 0.1 to 5 parts by weight per 100 parts by weight of each of the fluorosilicone and dimethylsilicone rubber compositions.

The addition of the vulcanizing agent may be accomplished by uniformly mixing the above-mentioned components and the vulcanizing agent on a rubber masticator such as a twin-roll mill, Banbury mixer, dough mixer or kneader. Vulcanization may be press vulcanization, steam vulcanization or hot air vulcanization (HAV), for example. A turbo-air-hose, for example, may be manufactured by sheeting the fluorosilicone and dimethylsilicone rubber compositions, laminating them on a mandrel, wrapping a film thereon, and vulcanizing in a steam vulcanization furnace. The vulcanization conditions include a temperature of 100 to 200°C and a time of 10 minutes to 2 hours in the case of steam vulcanization, 150 to 500 °C and 10 seconds to 1 hour in the case of HAV, and 100 to 200 °C and 1 minute to 1 hour in the case of press molding or vulcanization.

### EXAMPLE

Examples of the invention are given below by way of illustration and not by way of limitation. All parts are by weight. The average degree of polymerization is determined as a number average value by GPC analysis versus polystyrene standards.

### Examples 1 to 4 & Comparative Examples 1 and 2

Base compounds were prepared by the following procedure.

### Fluorosilicone base compound

Fluorosilicone base compounds A, A', B, and C were prepared as shown in Table 1 by adding 20 parts of dry silica having a BET specific surface area of about 300 m²/g, about 200 m²/g or about 130 m²/g (fumed silica Aerosil 300, Aerosil 200 or Aerosil 130 by Nippon Aerosil Co., Ltd.) and 4 parts of diphenylsilane diol as a dispersant to 100 parts of a fluorosilicone of the following formula (9) which is gum-like at room temperature (25°C) (i.e., trifluoropropylmethyl-polysiloxane), uniformly mixing them, heat treating the blend at 150 °C for 4 hours, and milling the blend on a twin-roll mill for plasticization.

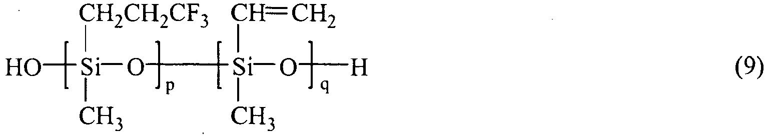

In formula (9), p+q indicative of an average degree of polymerization is about 4,000, and q/(p+q) indicative of a content of vinyl-containing siloxane units based on the entire siloxane units is 0.3±0.05 mol%.

### Dimethylsilicone base compound

Dimethylsilicone base compounds (a), (b), and (c) were prepared as shown in Table 1 by adding 35 parts of dry silica having a BET specific surface area of about 300 m²/g, about 200 m²/g or about 130 m²/g (fumed silica Aerosil 300, Aerosil 200 or Aerosil 130 by Nippon Aerosil Co., Ltd.) and 6 parts of hydroxyl-terminated dimethylpolysiloxane having a degree of polymerization of 10 as a dispersant to 100 parts of a dimethylpolysiloxane of the following formula (10) which is gum-like at room temperature (25°C), uniformly mixing them, heat treating the blend at 150°C for 4 hours, and milling the blend on a twin-roll mill for plasticization.

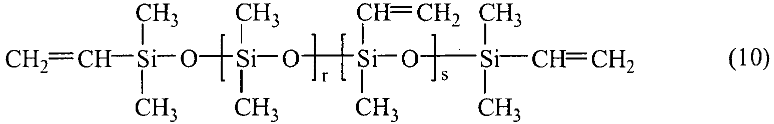

In formula (10), r+s indicative of an average degree of polymerization is about 5,000, and s/(r+s) indicative of a content of vinyl-containing siloxane units based on the entire siloxane units in the backbone is 0.2±0.05 mol%.

Next, on a twin-roll mill, base compound A, A', B, C, a, b, or c was compounded with organohydrogenpolysiloxane (i) of the following formula in an amount as shown in Table 1 to form preparations.

Organohydrogenpolysiloxane (i)

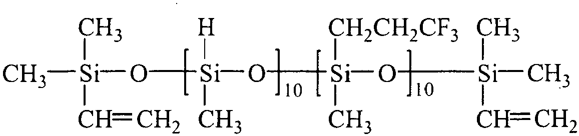

The above formulation is shown in Table 1.

**Table 1: Formulation (parts by weight)**

| Base compound | A | A' | B | C | a | b | c |
|---|---|---|---|---|---|---|---|
| Fluorosilicone gum | 100 | 100 | 100 | 100 | | | |
| Dimethylsilicone gum | | | | | 100 | 100 | 100 |
| Aerosil 300 | 20 | 20 | | | 35 | | |
| Aerosil 200 | | | 20 | | | 35 | |
| Aerosil 130 | | | | 20 | | | 35 |
| Diphenylsilanediol | 4 | 4 | 4 | 4 | | | |
| Hydroxyl-terminated dimethylpolysiloxane | | | | | 6 | 6 | 6 |
| Hydrogenpolysiloxane (relative to 100 pbw of base compound) | 2 | | 2 | 2 | | | |

The preparations thus obtained were examined for adhesion by the following test.

### Adhesion test

Fluorosilicone and dimethylsilicone compositions were prepared by compounding 100 parts of the corresponding preparations with 0.8 parts of a paste containing 80 wt% of 2,5-dimethyl-2,5-di(tert-butylperoxy)hexane on a twin-roll mill. The fluorosilicone composition was sheeted by means of a twin-roll mill into a strip of 25 mm × 175 mm × 1.0-1.2 mm thick. On the fluorosilicone rubber strip, a sheet of 25 mm × 90 mm × 0.2 mm thick was laid with one side edge in register. The dimethylsilicone composition was sheeted into a strip of 25 mm × 175 mm × 1.0-1.2 mm thick, which was laid on the fluorosilicone rubber strip partially via the sheet. The assembly was press vulcanized under molding conditions including a temperature of 170°C, a time of 10 minutes and a pressure of 1 MPa, forming a test sample. In this test sample, portions of the fluorosilicone layer and the dimethylsilicone layer were separated by the sheet. A peeling force (MPa) was determined as bond strength by using a tensile tester, securing the separated portions of the fluorosilicone and dimethylsilicone layers, and pulling them apart in opposite directions at a constant speed of 50 mm/min. The results are shown in Table 2.

**Table 2: Adhesion test**

| | Example | | | | Comparative Example | |
|---|---|---|---|---|---|---|
| | 1 | 2 | 3 | 4 | 1 | 2 |
| Fluorosilicone rubber | A | A | A | C | B | A' |
| Dimethylsilicone rubber | a | b | c | a | b | a |
| Bond strength at fluorosilicone/ dimethylsilicone interface (MPa) | 2.3 | 1.6 | 1.5 | 2.0 | 1.2 | 0.2 |

### Example 5 & Comparative Examples 3 and 4

Dimethylsilicone rubber compounds (d) and (e) were prepared in the same way as dimethylsilicone rubber compound (a) in Example 1 except that the reinforcing silica Aerosil 300 was replaced by wet silica (Nipsil LP by Tosoh Silica Co., Ltd., BET specific surface area 180 m²/g) and surface hydrophobized silica (Aerosil R-974 by Nippon Aerosil Co., Ltd., BET specific surface area 170 m²/g), respectively.

Using a twin-roll mill, dimethylsilicone rubber compounds (a), (d) and (e) were compounded with organohydrogenpolysiloxane (i) in an amount as shown in Table 3 to form dimethylsilicone rubber preparations (a'), (d) and (e), respectively. Dimethylsilicone compositions were prepared from these preparations as in Examples 1 to 4. An adhesion test was carried out as in Examples 1 to 4, with the results shown in Table 4.

**Table 3: Formulation (parts by weight)**

| Base compound | a' | d | e |
|---|---|---|---|
| Dimethylsilicone gum | 100 | 100 | 100 |
| Aerosil 300 | 35 | | |
| Nipsil LP | | 35 | |
| Aerosil R-974 | | | 35 |
| Hydroxyl-terminated dimethylpolysiloxane | 6 | 6 | 6 |
| Hydrogenpolysiloxane (relative to 100 pbw of base compound) | 2 | 2 | 2 |

**Table 4: Adhesion test**

| | Example | Comparative Example | |
|---|---|---|---|
| | 5 | 3 | 4 |
| Fluorosilicone rubber | A' | A' | A' |
| Dimethylsilicone rubber | a' | d | e |
| Bond strength at fluorosilicone/ dimethylsilicone interface (MPa) | 2.2 | 0.9 | 1.0 |

It was demonstrated by data in Tables 2 and 4 that laminates characterized by a strong bond at the fluorosilicone/dimethylsilicone interface are manufactured by using untreated dry silica having a specific surface area (BET method) of at least 250 m²/g as the filler for dimethylsilicone and fluorosilicone rubbers, and adding an adhesion promoter to at least one of dimethylsilicone and fluorosilicone rubbers.

## Claims

1. A method for bonding a fluorosilicone rubber composition and a dimethylsilicone rubber composition through co-vulcanization,
either one or both of the silicone rubber compositions comprising a surface-untreated dry silica having a BET specific surface area of at least 250 m²/g as reinforcing silica, and
at least one of the silicone rubber compositions comprising, as adhesion promoter,
an organohydrogenpolysiloxane comprising, at least one for each, siloxane units of the following formulae (1), (2) and (3) in a molecule, 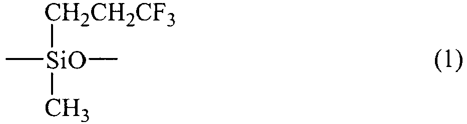 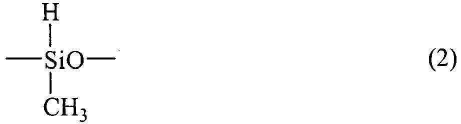 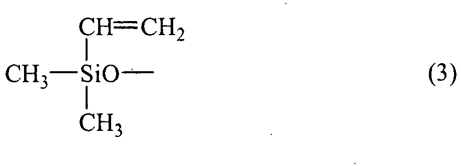 or an organohydrogenpolysiloxane comprising, at least one for each, siloxane units of the following formulae (1), (2) and (4) in a molecule.

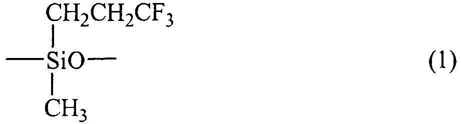

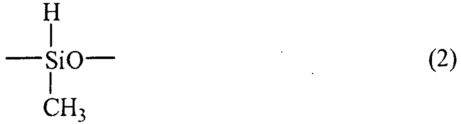

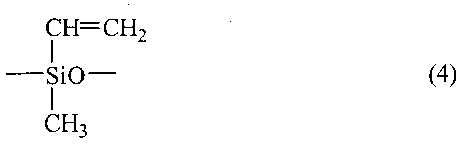

2. The method of claim 1 wherein both the fluorosilicone rubber composition and the dimethylsilicone rubber composition are vulcanized with an organic peroxide.

3. The method of any one of preceding claims wherein the trifluoropropyl-containing siloxane units of formula (1) accounts for 1 to 90 mol%, the hydrogensiloxane unit of formula (2) accounts for 1 to 90 mol%, the dimethylvinylsiloxane unit of formula (3) or the methylvinylsiloxane unit of formula (4) accounts for 1 to 10 mol% based on all siloxane units in the organohydrogenpolysiloxane.

4. The method of any one of preceding claims wherein the fluorosilicone rubber composition comprises
(a) 100 parts by weight of a trifluoropropyl-containing organopolysiloxane having the following average compositional formula (6):
R¹ₐR²_{b}R³_{c}SiO_{(4-a-b-c)/2} (6)
wherein R¹ is trifluoropropyl, R² is selected from substituted or unsubstituted, monovalent aliphatic unsaturated hydrocarbon groups of 2 to 8 carbon atoms, R³ is selected from unsubstituted, monovalent aliphatic saturated hydrocarbon groups of 1 to 8 carbon atoms and aromatic hydrocarbon groups, the subscript a is a positive number of 0.96 to 1.01, b is a positive number of 0.0001 to 0.005, c is a positive number of 0.96 to 1.06, and the sum of a+b+c is from 1.98 to 2.02,
said organopolysiloxane having at least two monovalent aliphatic unsaturated hydrocarbon groups R² in a molecule, and having a viscosity of at least 10,000 mPa-s at 25°C, and
(b) 2 to 100 parts by weight of reinforcing silica having a specific surface area of at least 250 m²/g,
and the dimethylsiloxane rubber composition comprises
(c) 100 parts by weight of a dimethylpolysiloxane having the following average compositional formula (8):
RₐSiO_{(4-a)/2} (8)
wherein R is each independently selected from unsubstituted monovalent hydrocarbon groups of 1 to 10 carbon atoms selected from methyl group and aliphatic unsaturated groups and the subscript a is a positive number of 1.90 to 2.05,
said dimethylpolysiloxane having at least two aliphatic unsaturated groups, and having an average degree of polymerization of 100 to 50,000, and
(b) 2 to 100 parts by weight of reinforcing silica having a specific surface area of at least 250 m²/g.

5. The method of any one of preceding claims wherein the amount of the adhesion promoter added is 0.1 to 30 parts by weight per 100 parts by weight of (a) the trifluoropropyl-containing organopolysiloxane or (c) the dimethylpolysiloxane.

6. A laminate of fluorosilicone rubber and dimethylsilicone rubber which have been co-vulcanization bonded by the method of any one of claims 1 to 5.

## Patentansprüche

1. Verfahren zum Verbinden einer Fluorsiliconkautschukzusammensetzung und einer Dimethylsiliconkautschukzusammensetzung durch Covulkanisation,
wobei entweder eine oder beide der Siliconkautschukzusammensetzungen ein Oberflächen-unbehandeltes, trockenes Silica mit einer spezifischen Oberfläche nach BET von mindestens 250 m²/g als Verstärkungssilica umfasst, und
mindestens eine der Siliconkautschukzusammensetzungen als Adhäsionspromotor umfasst,
ein Organohydrogenpolysiloxan, umfassend, mindestens eine für jedes, Siloxaneinheiten der folgenden Formeln (1), (2) und (3) in einem Molekül 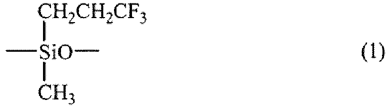 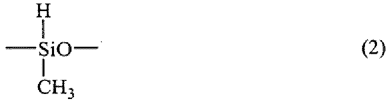 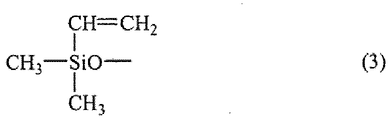 oder ein Organohydrogenpolysiloxan, umfassend, mindestens eine für jedes, Siloxaneinheiten der folgenden Formeln (1), (2) und (4) in einem Molekül

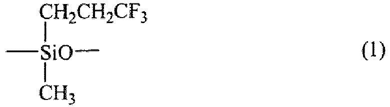

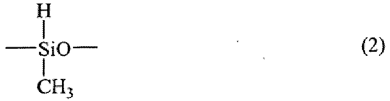

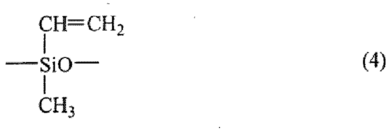

2. Verfahren nach Anspruch 1, wobei beide, die Fluorsiliconkautschukzusammensetzung und die Dimethylsiliconkautschukzusammensetzung, mit einem organischen Peroxid vulkanisiert werden.

3. Verfahren nach mindestens einem der vorangehenden Ansprüche, wobei die Trifluorpropyl-haltigen Siloxaneinheiten der Formel (1) 1 bis 90 Mol-% ausmachen, die Hydrogensiloxaneinheit der Formel (2) 1 bis 90 Mol-% ausmacht, die Dimethylvinylsiloxaneinheit der Formel (3) oder die Methylvinylsiloxaneinheit der Formel (4) 1 bis 10 Mol-% ausmacht, basierend auf sämtlichen Siloxaneinheiten in dem Organohydrogenpolysiloxan.

4. Verfahren nach mindestens einem der vorangehenden Ansprüche, wobei die Fluorsiliconkautschukzusammensetzung umfasst
(a) 100 Gewichtsteile eines Trifluorpropyl-haltigen Organopolysiloxans der folgenden durchschnittlichen Zusammensetzungsformel (6):
R¹ₐR²_{b}R³_{c}SiO_{(4-a-b-c)/2} (6)
worin R¹ Trifluorpropyl ist, R² gewählt ist aus substituierten oder unsubstituierten, einwertigen, aliphatischen, ungesättigten Kohlenwasserstoffgruppen mit 2 bis 8 Kohlenstoffatomen, R³ gewählt ist aus unsubstituierten, einwertigen, aliphatischen, gesättigten Kohlenwasserstoffgruppen mit 1 bis 8 Kohlenstoffatomen und aromatischen Kohlenwasserstoffgruppen, der tiefgestellte Index a eine positive Zahl von 0,96 bis 1,01 ist, b eine positive Zahl von 0,0001 bis 0,005 ist, c eine positive Zahl von 0,96 bis 1,06 ist, und die Summe aus a+b+c 1,98 bis 2,02 beträgt,
wobei das Organopolysiloxan mindestens zwei einwertige, aliphatische, ungesättigte Kohlenwasserstoffgruppen R² in einem Molekül besitzt und eine Viskosität von mindestens 10.000 mPa·s bei 25°C aufweist, und
(b) 2 bis 100 Gewichtsteile Verstärkungssilica mit einer spezifischen Oberfläche von mindesten 250 m²/g,
und die Dimethylsiloxankautschukzusammensetzung umfasst
(c) 100 Gewichtsteile eines Dimethylpolysiloxans der folgenden allgemeinen durchschnittlichen Zusammensetzungsformel (8):
RₐSiO_{(4-a)/2} (8)
worin R jeweils unabhängig gewählt ist aus unsubstituierten, einwertigen Kohlenwasserstoffgruppen mit 1 bis 10 Kohlenstoffatomen, gewählt aus Methylgruppe und aliphatischen ungesättigten Gruppen, und der tiefgestellte Index a eine positive Zahl von 1,90 bis 2,05 ist,
wobei das Dimethylpolysiloxan mindestens zwei aliphatische ungesättigte Gruppen aufweist und einen durchschnittlichen Polymerisationsgrad von 100 bis 50.000 besitzt, und
(b) 2 bis 100 Gewichtsteile Verstärkungssilica mit einer spezifischen Oberfläche von mindestens 250 m²/g.

5. Verfahren nach mindestens einem der vorangehenden Ansprüche, wobei die Menge des zugesetzten Adhäsionspromotors 0,1 bis 30 Gewichtsteile beträgt pro 100 Gewichtsteile von (a) dem Trifluorpropyl-haltigen Organopolysiloxan oder (c) dem Dimethylpolysiloxan.

6. Laminat aus Fluorsiliconkautschuk und Dimethylsiliconkautschuk, welche durch das Verfahren nach mindestens einem der Ansprüche 1 bis 5 co-vulkanisationsgebunden worden sind.

## Revendications

1. Procédé de liaison d'une composition de caoutchouc de fluorosilicone et d'une composition de caoutchouc de diméthylsilicone par co-vulcanisation,
l'une ou l'autre ou les deux des compositions de caoutchouc de silicone comprenant une silice anhydre non traitée en surface ayant une surface spécifique BET d'au moins 250 m²/g en tant que silice de renforcement, et
au moins l'une des compositions de caoutchouc de silicone comprenant, en tant que promoteur d'adhésion, un organohydrogénopolysiloxane comprenant, au moins une de chacune des unités siloxane des formules (1), (2) et (3) suivantes dans une molécule, 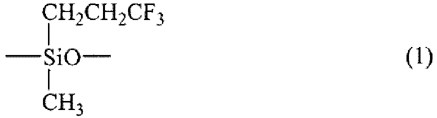 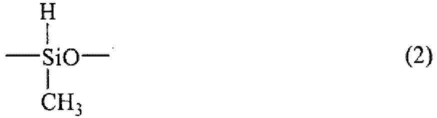 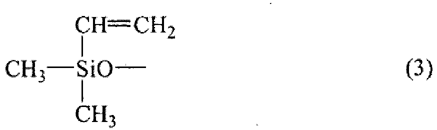 ou un organohydrogénopolysiloxane comprenant, au moins une de chacune des unités siloxane des formules (1), (2) et (4) suivantes dans une molécule.

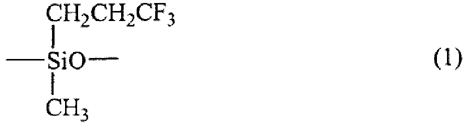

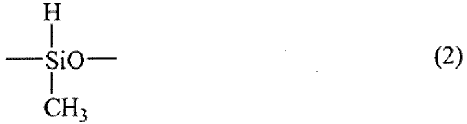

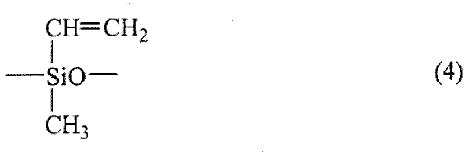

2. Procédé selon la revendication 1, dans lequel la composition de caoutchouc de fluorosilicone et la composition de caoutchouc de diméthylsilicone sont vulcanisées avec un peroxyde organique.

3. Procédé selon l'une quelconque des revendications précédentes, dans lequel l'unité siloxane contenant un groupe trifluoropropyle de formule (1) représente 1 à 90 % en moles, l'unité hydrogénosiloxane de formule (2) représente 1 à 90 % en moles, l'unité diméthylvinylsiloxane de formule (3) ou l'unité méthylvinylsiloxane de formule (4) représente de 1 à 10% en moles sur la base de toutes les unités siloxane dans l'organohydrogénopolysiloxane.

4. Procédé selon l'une quelconque des revendications précédentes, dans lequel la composition de caoutchouc de fluorosilicone comprend
(a) 100 parties en poids d'un organopolysiloxane contenant un groupe triofluoropropyle ayant la formule compositionnelle moyenne (6) suivant
R¹ₐR²_{b}R³_{c}SiO_{(4-a-b-c)/2} (6)
dans lequel R¹ est un groupe trifluoropropyle, R2 est sélectionné parmi des groupes hydrocarbures monovalents, aliphatiques, insaturés, substitués ou non substitués, de 2 à 8 atomes de carbone, R³ est sélectionné parmi des groupes hydrocarbures monovalents, aliphatiques, saturés, non substitués, de 1 à 8 atomes de carbone et des groupes hydrocarbures aromatiques, le a en indice est un nombre positif de 0,96 à 1,01, b est un nombre positif de 0,0001 à 0,005, c est un nombre positif de 0,96 à 1,06, et la somme de a + b + c est de 1,98 à 2,02,
ledit organopolysiloxane ayant au moins deux groupes hydrocarbures monovalents aliphatiques insaturés R² dans une molécule, et ayant une viscosité d'au moins 10 000 mPa·s à 25 °C, et
(b) de 2 à 100 parties en poids d'une silice de renforcement ayant une surface spécifique d'au moins 250 m²/g,
et la composition de caoutchouc de diméthylsiloxane comprend
(c) 100 parties en poids d'un diméthylpolysiloxane ayant la formule compositionnelle moyenne (8) suivants :
RₐSiO_{(4-a)/2} (8)
dans lequel chaque R est indépendamment sélectionné parmi des groupes hydrocarbures monovalents non substitués de 1 à 10 atomes de carbone sélectionnés parmi un groupe méthyle et des groupes aliphatiques insaturés et le a en indice est un nombre positif de 1,90 à 2,05, ledit diméthylpolysiloxane ayant au moins deux groupes aliphatiques insaturés, et ayant un degré moyen de polymérisation de 100 à 50 000, et
(b) de 2 à 100 parties en poids d'une silice de renforcement ayant une surface spécifique d'au moins 250 m²/g.

5. Procédé selon l'une quelconque des revendications précédentes, dans lequel la quantité de promoteur d'adhésion ajoutée est de 0,1 à 30 parties en poids pour 100 en poids (a) de l'organopolysiloxane contenant un groupe trifluoropropyle ou (c) du diméthylpolysiloxane.

6. Stratifié de caoutchouc de fluorosilicone et de caoutchouc de diméthylsilicone qui ont été liés par co-vulcanisation par le procédé selon l'une quelconque des revendications 1 à 5.
